# FASCICULE DE BREVET EUROPEEN

(11) **EP 1 615 791 B1**
(45) Date de publication et mention de la délivrance du brevet: **21.05.2008**
(21) Numéro de dépôt: 04712066.2
(22) Date de dépôt: 18.02.2004
(51) Int. Cl.: B60H 1/20, B60H 1/02, B60H 1/00, B60H 1/08

(54) **PROCEDE ET DISPOSITIF DE CHAUFFAGE D'UN HABITACLE DE VEHICULE AUTOMOBILE**
VERFAHREN UND ANORDNUNG ZUR HEIZUNG EINES KRAFTFAHRZEUGINNENRAUMES
METHOD AND DEVICE FOR HEATING A MOTOR VEHICLE CABIN

(30) Priorité: 24.04.2003 FR 0305071
(43) Date de publication de la demande: 18.01.2006
(73) Titulaire: Peugeot Citroen Automobiles SA, 78140 Vélizy-Villacoublay (FR)
(72) Inventeur: LE LIEVRE, Armel, F-78360 Montesson (FR)
(74) Mandataire: Domenego, Bertrand
(86) Numéro de dépôt international: PCT/FR2004/000383
(87) Numéro de publication internationale: WO 2004/096589

(56) Documents cités:
- EP-A- 0 985 807
- DE-A- 10 047 810
- FR-A- 2 821 298
- US-A- 5 082 174
- US-A- 5 192 021

## Description

La présente invention concerne un procédé et un dispositif de chauffage d'un habitacle de véhicule automobile.

Dans les véhicules automobiles, le moteur thermique comporte un circuit de circulation d'un fluide caloporteur qui est utilisé pour le refroidissement du moteur et également pour le chauffage de l'habitacle. A cet effet, le circuit comprend notamment une pompe et un aérotherme dans lequel circule un flux d'air qui récupère la chaleur emmagasinée par le fluide caloporteur afin de chauffer l'habitacle.

Mais, dans certain cas, et plus particulièrement pendant les premières minutes de fonctionnement du véhicule ou lorsqu'il fait particulièrement froid, ce dispositif de chauffage s'avère insuffisant.

Pour améliorer rapidement le chauffage de l'habitacle plusieurs solution sont utilisées jusqu'à présent.

Une de ces solutions, consiste à placer des résistances électriques parfois sur le circuit d'eau, mais plus généralement sur le circuit d'air. Une autre solution consiste à utiliser des brûleurs.

Mais ces solutions posent des problèmes d'implantation et augmentent le coût du véhicule. Par ailleurs, elles entraînent une surconsommation et une dépense d'énergie non négligeable, et dans le cas des brûleurs, des odeurs et des fumées.

Encore une autre solution consiste à placer dans la ligne d'échappement du véhicule, et en amont d'un ensemble de dépollution, un échangeur de chaleur intégré dans le circuit de circulation du fluide de refroidissement du moteur. Les calories des gaz d'échappement ainsi récupérées peuvent ainsi servir à chauffer indirectement l'habitacle du véhicule.

Cette disposition présente des inconvénients qui résident principalement dans le fait qu'elle entraîne une circulation des gaz d'échappement uniquement dans l'ensemble de dépollution constitué par un catalyseur, durant la phase de montée en température du moteur, c'est à dire pendant la phase de démarrage, pour que cet ensemble de dépollution arrive rapidement à sa température optimale de fonctionnement.

En conséquence, pendant cette phase de démarrage, il ne se produit aucune récupération supplémentaire d'énergie thermique pour chauffer l'habitacle.

Le document FR 2 821 298, qui est considéré comme l'état de la technique le plus proche, décrit une solution visant à augmenter la quantité de chaleur récupérable à l'échappement en utilisant le degré de liberté qu'offre une transmission pilotée pour déplacer le point de fonctionnement du moteur thermique vers des conditions plus favorables à la récupération de chaleur.

L'invention a pour but de résoudre ces problèmes et d'améliorer les performances de chauffage de l'habitacle.

L'invention a donc pour objet un procédé de chauffage d'un véhicule automobile au moyen d'un circuit de circulation d'un fluide caloporteur de refroidissement d'un moteur thermique et comportant une pompe, un aérotherme et un échangeur de chaleur disposé dans une ligne d'échappement munie d'un ensemble de dépollution, caractérisé en ce que, dans la ligne d'échappement et en aval de l'ensemble de dépollution, on oriente les gaz d'échappement vers ledit échangeur ou vers un conduit de dérivation et après l'injection principale du carburant dans les cylindres du moteur et pendant la phase de détente du cycle de ceux-ci, on injecte une quantité supplémentaire de carburant dans au moins certains desdits cylindres afin de provoquer une combustion supplémentaire de carburant et augmenter la température des gaz circulant dans la ligne d'échappement et dans l'échangeur en fonction des conditions de fonctionnement du moteur thermique, de la température extérieure, de la température de chauffage demandée dans l'habitacle, et de la température du fluide de refroidissement du moteur.

L'invention a également pour objet un dispositif de chauffage d'un habitacle d'un véhicule automobile du type comprenant un circuit de circulation d'un fluide caloporteur de refroidissement d'un moteur thermique et comportant une pompe, un aérotherme et un échangeur de chaleur disposé dans une ligne d'échappement munie d'un ensemble de dépollution, caractérisé en ce que l'échangeur est placé dans ladite ligne d'échappement en aval de l'ensemble de dépollution par rapport au sens de circulation des gaz d'échappement et le moteur comporte des moyens d'injection d'une quantité supplémentaire de carburant dans au moins certains des cylindres dudit moteur, après l'injection principale du carburant dans ceux-ci et pendant la phase de détente du cycle de ces cylindres, afin de provoquer une combustion supplémentaire de carburant et augmenter la température des gaz circulant dans la ligne d'échappement et dans l'échangeur et en ce qu'il comporte un volet d'orientation de ces gaz d'échappement vers l'échangeur ou vers un conduit de dérivation, ledit volet étant actionné par des moyens de commande en fonction des conditions de fonctionnement du moteur thermique, de la température extérieure, de la température de chauffage demandée dans l'habitacle, et de la température du fluide de refroidissement du moteur.

L'invention sera mieux comprise à la lecture de la description qui va suivre, donnée à titre d'exemple et faite ne se référant aux dessins annexés, sur lesquels :
- la Fig. 1 est un schéma d'un moteur thermique avec sa ligne d'échappement et équipé d'un dispositif de chauffage de l'habitacle, conforme à l'invention,
- la Fig. 2 représente une courbe de la récupération de l'énergie thermique dans la ligne d'échappement en fonction de la température du fluide de refroidissement du moteur et du temps.

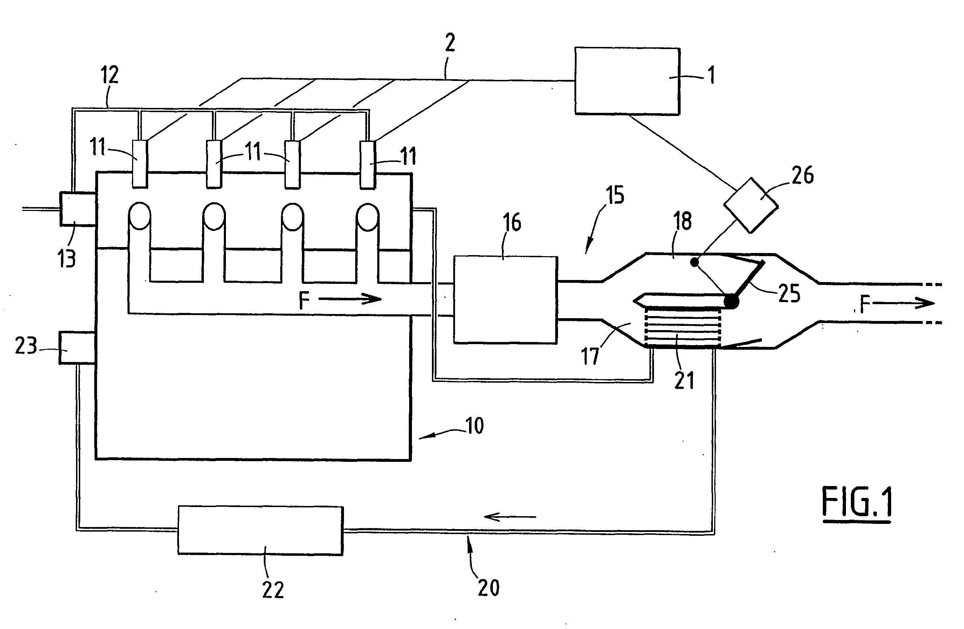

Sur la Fig. 1, on a représenté schématiquement un moteur thermique 10, par exemple un moteur DIESEL à injection directe, qui comporte, de manière classique, des injecteurs 11 alimentés en carburant par un circuit 12 muni d'une pompe haute pression 13. La commande de l'injection du carburant par les injecteurs 11 dans les cylindres du moteur 10 est effectuée au moyen d'un calculateur 1 relié à chaque injecteur 11 par un circuit électrique 2.

Le moteur thermique 10 comporte également une ligne d'échappement désignée par la référence générale 15 munie d'un ensemble de dépollution 16 formé par exemple par un catalyseur et un filtre à particules.

La ligne d'échappement 15 comporte, en aval de l'ensemble de dépollution 16 par rapport à la circulation des gaz d'échappement indiquée par les flèches "F" dans cette ligne d'échappement 15, un premier passage 17 et un second passage 18 de ces gaz d'échappement.

Ainsi que montré à la Fig. 1, le premier passage 17 de la ligne d'échappement 15 est équipé d'un échangeur de chaleur 21 d'un circuit 20 de circulation d'un fluide caloporteur de refroidissement du moteur thermique 10 et qui comporte aussi un aérotherme 22 et une pompe à eau 23. De façon classique, un flux d'air circule dans l'aérotherme 22 de façon à récupérer la chaleur emmagasinée par le fluide caloporteur circulant dans le circuit 20 pour chauffer l'habitacle du véhicule automobile.

La circulation des gaz d'échappement dans le premier passage 17 ou le second passage 18 est commandée par un volet 25 déplaçable par un actionneur 26 constitué par exemple par un moteur électrique, entre une première position de fermeture du second passage 18, comme représentée à la Fig. 1 et dans laquelle la totalité des gaz d'échappement circule dans le premier passage 17 à travers l'échangeur de chaleur 21 et une seconde position d'obturation du premier passage 17 et dans laquelle la totalité des gaz d'échappement circule dans le second passage 18 qui constitue un conduit de dérivation.

L'actionneur 26 est relié au calculateur 1.

Le basculement du volet 25 entre ces deux positions s'effectue dans le sens de circulation des gaz dans la ligne d'échappement 15.

Ainsi que montré à la Fig.1, le volet 25 est, de préférence, disposé en aval de l'échangeur 21 par rapport au sens de circulation des gaz dans la ligne d'échappement 15.

Par ailleurs, le moteur thermique 10 comporte des moyens d'injection d'une quantité supplémentaire de carburant dans au moins certains des cylindres dudit moteur après l'injection principale du carburant dans ceux-ci et pendant la phase de détente du cycle de ces cylindres, afin de provoquer une combustion supplémentaire de carburant et augmenter la température des gaz d'échappement circulant notamment dans l'échangeur de chaleur 21.

Le calculateur permet en fonction de différents paramètres tels que la température du fluide de refroidissement du moteur 10 et la température extérieure et la demande en chauffage dans l'habitacle et le régime de rotation du moteur et/ou la charge de ce moteur, de régler les stratégies de commande des injecteurs 11 pour modifier la répartition du bilan énergétique du carburant consommé afin, dans les phases de fonctionnement où la puissance thermique pour le chauffage de l'habitacle est insuffisante, d'augmenter l'énergie thermique transférée vers les parois du moteur donc dans le circuit 20 de circulation du fluide caloporteur ou dans les gaz circulant dans la ligne d'échappement 15, c'est à dire dans l'ensemble de dépollution 16 et dans l'échangeur de chaleur 21.

Le système de chauffage de l'habitacle du véhicule est généralement mis en fonctionnement pour des températures de l'air extérieur, inférieure à 10°C.

Les conditions de fonctionnement du moteur 10 prises en compte dans le procédé selon l'invention sont le couple et/ou le régime de rotation dudit moteur.

Dans le procédé selon l'invention plusieurs stratégies de récupération de l'énergie thermique à l'échappement (RTE) seule ou combinée avec l'injection d'une quantité supplémentaire de carburant (PI) dans au moins certains des cylindres dudit moteur 10 peuvent être envisagées.

D'une manière générale, les gaz d'échappement sont orientés vers l'échangeur 21 pour récupérer de l'énergie thermique à l'échappement (RTE) sans injection supplémentaire de carburant (PI) dans certains des cylindres pour un régime de rotation maximum déterminé compris entre 2500 et 3500 tr/mn et/ou un couple inférieur à un couple maximum déterminé compris entre 100 et 200 Nm.

De même, les gaz d'échappement sont orientés vers l'échangeur 21 sans injection supplémentaire de carburant pour une température du fluide de refroidissement inférieure à une température comprise entre 70 et 85°C et de préférence inférieure à 80°C et une température extérieure inférieure à une température comprise entre 5 et 15°C et de préférence inférieure à 10°C.

Par ailleurs, les gaz d'échappement sont orientés vers l'échangeur 21 pour récupérer de l'énergie thermique à l'échappement (RTE) avec simultanément une injection supplémentaire de carburant (PI) dans certains des cylindres du moteur 10 pour un régime de rotation maximum déterminé compris entre 2500 et 3500 tr/mn et/ou un couple déterminé compris entre un couple maximum et un couple minimum qui sont fonctions du régime de rotation dudit moteur 10.

De même, les gaz d'échappement sont orientés vers l'échangeur 21 avec simultanément une injection supplémentaire de carburant dans certains cylindres pour une température du fluide de refroidissement du moteur 10 comprise entre une température minimum comprise entre -5°C et +5°C et de préférence de l'ordre de 0°C et une température maximum comprise entre 70 et 85°C et de préférence de l'ordre de 80°C et une température extérieure inférieure à une température comprise entre 5 et 15°C et de préférence de l'ordre de 10°C.

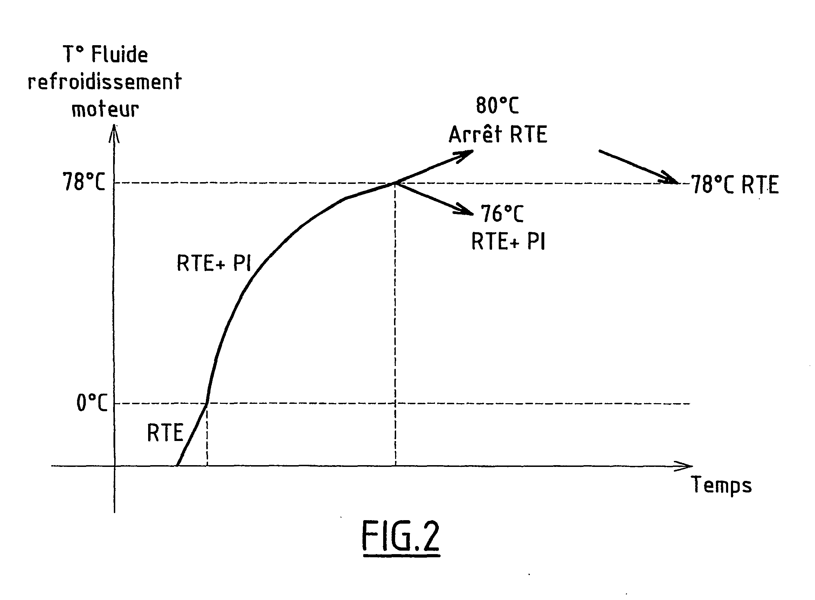

En se reportant maintenant à la Fig. 2, on va décrire un exemple de stratégie de fonctionnement du procédé selon l'invention.

A titre d'exemple, le système de chauffage de l'habitacle du véhicule est mis en fonctionnement pour une température de l'air extérieur, inférieure à 10°C.

Lors d'un démarrage à froid du véhicule, avec une température de l'air extérieur inférieure à 10°C, le calculateur enclenche, pour le confort de l'habitacle, la récupération de l'énergie thermique à l'échappement (RTE) seule pour une température du fluide caloporteur dans le circuit 20 inférieure à 0°C.

Lors de l'utilisation de la récupération d'énergie thermique à l'échappement, l'actionneur 26 commande le volet 25 dans la position d'obturation du conduit de dérivation 18 pour que la totalité des gaz d'échappement circule dans le premier passage 17 et par conséquent dans l'échangeur de chaleur 21 afin d'augmenter la température du fluide caloporteur circulant dans le circuit 20.

Ainsi que montré à la Fig. 2, pour une température du fluide de refroidissement du moteur 10 comprise entre 0 et 78°C, le calculateur 1 actionne la récupération de l'énergie thermique à l'échappement en faisant passer la totalité des gaz d'échappement dans l'échangeur 21 et également l'injection d'une quantité supplémentaire de carburant dans au moins certains des cylindres du moteur 10 et ainsi augmenter la température des gaz d'échappement circulant dans l'échangeur 21 ce qui permet de disposer d'un apport de calories supplémentaires pour chauffer l'habitacle du véhicule automobile.

Pour une température du fluide de refroidissement comprise entre 78 et 80°C, le calculateur 1 actionne uniquement la récupération de l'énergie thermique à l'échappement. Cette récupération de l'énergie thermique à l'échappement est réenclenchée si la température de ce fluide de refroidissement du moteur thermique descend au-dessous de 78°C, comme montré à la Fig. 2.

Enfin, la récupération de l'énergie thermique à l'échappement ainsi que l'injection d'une quantité supplémentaire de carburant se réenclenchent si la température du fluide de refroidissement dans le circuit 20 descend au-dessous de 76°C.

Les différentes stratégies ainsi mentionnées ne sont citées qu'à titre d'exemple et peuvent bien évidemment être modifiées.

Pendant les phases de circulation des gaz d'échappement dans l'échangeur 21, ces gaz d'échappement circulent également dans l'ensemble de dépollutions 16. Ainsi, au cours de la phase de démarrage durant laquelle une récupération supplémentaire d'énergie thermique pour chauffer l'habitacle est effectuée par l'échangeur de chaleur 21, les gaz d'échappement circulent dans l'ensemble de dépollution 16 ce qui permet une montée rapide en température de cet ensemble de dépollution afin qu'il atteigne dans un délai très court sa température optimale de fonctionnement.

## Revendications

1. Procédé de chauffage d'un habitacle d'un véhicule automobile au moyen d'un circuit (20) de circulation d'un fluide caloporteur de refroidissement d'un moteur thermique (10) et comportant une pompe (23), un aérotherme (22) et un échangeur de chaleur (21) disposé dans une ligne d'échappement (15) munie d'un ensemble de dépollution (16), **caractérisé en ce que** dans la ligne d'échappement (15) et en aval de l'ensemble de dépollution (16), on oriente les gaz d'échappement vers ledit échangeur (21) ou vers un conduit de dérivation (18) et après l'injection principale du carburant dans les cylindres du moteur (10), et pendant la phase de détente du cycle de ceux-ci, on injecte une quantité supplémentaire de carburant dans au moins certains desdits cylindres afin de provoquer une combustion supplémentaire de carburant et augmenter la température des gaz circulant dans la ligne d'échappement (15) et dans l'échangeur (21) en fonction des conditions de fonctionnement du moteur thermique (10), de la température extérieure, de la température de chauffage demandée dans l'habitacle, et de la température du fluide de refroidissement du moteur.

2. Procédé selon la revendication 1, **caractérisé en ce que** les conditions de fonctionnement du moteur prises en compte sont le couple et/ou le régime de rotation dudit moteur.

3. Procédé selon la revendication 1 ou 2, **caractérisé en ce que** l'on oriente les gaz d'échappement vers l'échangeur (21) sans injection supplémentaire de carburant pour un régime de rotation maximum déterminé compris entre 2500 et 3500 tr/mn et/ou un couple inférieur à un couple maximum déterminé compris entre 100 et 200 Nm.

4. Procédé selon l'une quelconque des revendications 1 à 3, **caractérisé en ce que** l'on oriente les gaz d'échappement vers l'échangeur (21) sans injection supplémentaire de carburant pour une température du fluide de refroidissement inférieure à une température comprise entre 70 et 85°C et de préférence inférieure à 80°C et une température extérieure inférieure à une température comprise entre 5 et 15°C et de préférence inférieure à 10°C.

5. Procédé selon l'une quelconque des revendications 1 à 4, **caractérisé en ce que** l'on oriente les gaz d'échappement vers l'échangeur (21) avec simultanément une injection supplémentaire de carburant pour un régime de rotation maximum déterminé compris entre 2500 et 3500 tr/mn et/ou un couple déterminé compris entre un couple maximum et un couple minimum qui sont fonctions du régime de rotation du moteur.

6. Procédé selon l'une quelconque des revendications 1, 2 ou 5, **caractérisé en ce que** l'on oriente les gaz d'échappement vers l'échangeur (21) avec simultanément une injection supplémentaire de carburant pour une température du fluide de refroidissement comprise entre une température minimum comprise entre -5°C et +5°C et de préférence de l'ordre de 0°C et une température maximum comprise entre 70 et 85°C et de préférence de l'ordre de 80°C et une température extérieure inférieure à une température comprise entre 5 et 15°C et de préférence de l'ordre de 10°C.

7. Dispositif de chauffage d'un habitacle d'un véhicule automobile, du type comprenant un circuit (20) de circulation d'un fluide caloporteur de refroidissement d'un moteur thermique (10) et comportant une pompe (23), un aérotherme (22) et un échangeur de chaleur (21) disposé dans une ligne d'échappement (15) munie d'un ensemble de dépollution (16), **caracterisé en ce que** l'échangeur (21) est placé dans ladite ligne d'échappement (15) en aval de l'ensemble de dépollution (16) par rapport au sens de circulation des gaz d'échappement, et le moteur (10) comporte des moyens d'injection d'une quantité supplémentaire de carburant dans au moins certains des cylindres dudit moteur, après l'injection principale du carburant dans ceux-ci et pendant la phase de détente du cycle de ces cylindres, afin de provoquer une combustion supplémentaire de carburant et augmenter la température des gaz circulant dans la ligne d'échappement (15) et dans l'échangeur (21), et **en ce qu'**il comporte un volet (25) d'orientation de ces gaz d'échappement vers l'échangeur (21) ou vers un conduit de dérivation (18), ledit volet (25) étant actionné par des moyens de commande (26) en fonction des conditions de fonctionnement du moteur thermique, de la température extérieure, de la température de chauffage demandée dans l'habitacle et de la température du fluide de refroidissement du moteur.

8. Dispositif selon la revendication 7, **caractérisé en ce que** le moteur thermique (10) est un moteur DIESEL à injection directe.

9. Dispositif selon la revendication 7 ou 8, **caractérisé en ce que** le volet (25) est basculable entre une première position de fermeture du conduit de dérivation (18) et une seconde position d'ouverture de ce conduit de dérivation (18), ledit basculement entre la première et la seconde desdites positions s'effectuant dans le sens de circulation des gaz dans la ligne d'échappement (15).

10. Dispositif selon l'une quelconque des revendications 7 à 9, **caractérisé en ce que** le volet (25) est disposé en aval de l'échangeur (21) par rapport au sens de circulation des gaz dans la ligne d'échappement.

## Claims

1. Method for heating a cabin of a motor vehicle using a circuit (20) through which a heat transfer fluid used to cool a combustion engine (10) circulates and comprising a pump (23), a unit heater (22) and a heat exchanger (21) positioned in an exhaust line (15) fitted with a pollution control assembly (16), **characterized in that**, in the exhaust line (15) and downstream of the pollution control assembly (16), the exhaust gases are directed towards the said exchanger (21) or towards a bypass pipe (18) and after the main injection of fuel into the cylinders of the engine (10), and during the power stroke of the cylinder cycle an additional quantity of fuel is injected into at least some of the said cylinders so as to burn additional fuel and increase the temperature of the gases circulating through the exhaust line (15) and through the exchanger (21) according to the operating conditions of the combustion engine (10), the external temperature, the heating temperature demanded in the cabin and the temperature of the engine cooling fluid.

2. Method according to Claim 1, **characterized in that** the engine operating conditions taken into consideration are the torque and/or the speed of the said engine.

3. Method according to Claim 1 or 2, **characterized in that** the exhaust gases are directed towards the exchanger (21) with no additional injection of fuel for a determined maximum engine speed of between 2500 and 3500 rom and/or a torque below a determined maximum torque ranging between 100 and 200 Nm.

4. Method according to any one of Claims 1 to 3, **characterized in that** the exhaust gases are directed towards the exchanger (21) with no additional injection of fuel for a cooling fluid temperature below a temperature ranging between 70 and 85°C and preferably below 80°C and an external temperature below a temperature ranging between 5 and 15°C and preferably below 10°C.

5. Method according to any one of Claims 1 to 4, **characterized in that** the exhaust gases are directed towards the exchanger (21) with, at the same time, an additional injection of fuel for a determined maximum engine speed of between 2500 and 3500 rpm and/or a determined torque ranging between a maximum torque and a minimum torque which are dependent on the engine speed.

6. Method according to any one of Claims 1, 2 and 5, **characterized in that** the exhaust gases are directed towards the exchanger (21) with, at the same time, an additional injection of fuel for a cooling fluid temperature ranging between a minimum temperature ranging between -5° and +5°C and preferably of the order of 0°C and a maximum temperature ranging between 70 and 85° and preferably of the order of 80°C and an external temperature below a temperature ranging between 5 and 15°C and preferably of the order of 10°C.

7. Device for heating a cabin of a motor vehicle, of the type comprising a circuit (20) through which a heat transfer fluid used to cool a combustion engine (10) circulates and comprising a pump (23), a unit heater (22) and a heat exchanger (21) positioned in an exhaust line (15) fitted with a pollution control assembly (16), **characterized in that** the exchanger (21) is positioned in the said exhaust line (15) downstream of the pollution control assembly (16) with respect to the direction in which the exhaust gases circulate, and the engine (10) comprises means of injecting an additional quantity of fuel into at least some of the cylinders of the said engine after the main injection of fuel into these cylinders and during the power stroke of the cylinder cycle, so as to burn additional fuel and increase the temperature of the gases circulating through the exhaust line (15) and through the exchanger (21), and **in that** it comprises a shutter (25) for directing these exhaust gases towards the exchanger (21) or towards a bypass pipe (18), the said shutter (25) being actuated by control means (26) according to the cperating conditions of the combustion engine, the external temperature, the heating temperature demanded in the cabin and the temperature of the engine cooling fluid.

8. Device according to Claim 7, **characterized in that** the combustion engine (10) is a direct injection diesel engine.

9. Device according to Claim 7 or 8, **characterized in that** the shutter (25) can be pivoted between a first position in which it closes off the bypass pipe (18) and a second position in which it opens this bypass pipe (18), the said pivoting between the first and the second of the said positions being performed in the direction in which the gases circulate through the exhaust line (15).

10. Device according to any one of Claims 7 to 9, **characterized in that** the shutter (25) is positioned downstream of the exchanger (21) with respect to the direction in which the gases circulate through the exhaust line.

## Patentansprüche

1. Verfahren zum Heizen einer Fahrgastzelle eines Kraftfahrzeugs mittels eines Kühlmittelzirkulationskreislaufs (20) zur Kühlung eines Verbrennungsmotors (10), umfassend eine Pumpe (23), einen Lufterhitzer (22) und einen Wärmeaustauscher (21), der in einer mit einer Schadstoffreinigungseinheit (16) versehenen Abgasleitung (15) angeordnet ist, **dadurch gekennzeichnet, dass** in der Abgasleitung (15) und bezüglich die Schadstoffreinigungseinheit (16) strömungsabwärts, die Abgase zum Austauscher (21) oder zu einer Abzweigleitung (18) hin geleitet werden, und nach der Haupteinspritzung des Kraftstoffs in die Zylinder des Motors (10) und während der Entspannungsphase des Zyklus von diesen, eine zusätzliche Menge Kraftstoff in zumindest manche der Zylinder eingespritzt wird, um eine zusätzliche Kraftstoffverbrennung hervorzurufen und die Temperatur der in der Abgasleitung (15) und im Wärmetauscher (21) zirkulierenden Gase in Abhängigkeit von den Betriebsbedingungen des Verbrennungsmotors (10), der Außentemperatur, der in der Fahrgastzelle angeforderten Temperatur und der Temperatur des Kühlmittels des Motors zu erhöhen.

2. Verfahren nach Anspruch 1, **dadurch gekennzeichnet, dass** die es sich bei den berücksichtigten Betriebsbedingungen des Motors um das Drehmoment und/oder die Drehzahl des Motors handelt.

3. Verfahren nach Anspruch 1 oder 2, **dadurch gekennzeichnet, dass** die Abgase bei einer bestimmten Höchstdrehzahl zwischen 2500 und 3500 U/min und/oder einem bestimmten Höchstdrehmoment zwischen 100 und 200 Nm ohne zusätzliche Kraftstoffeinspritzung zum Austauscher (21) geleitet werden.

4. Verfahren nach einem der Ansprühe 1 bis 3, **dadurch gekennzeichnet, dass** die Abgase bei einer Kühlmitteltemperatur unter einer Temperatur zwischen 70 und 85°C und vorzugsweise unter 80°C und einer Außentemperatur unter einer Temperatur zwischen 5 und 15°C und vorzugsweise unter 10°C ohne zusätzliche Kraftstoffeinspritzung zum Austauscher (21) geleitet werden.

5. Verfahren nach einem der Ansprühe 1 bis 4, **dadurch gekennzeichnet, dass** die Abgase bei einer bestimmten Höchstdrehzahl zwischen 2500 und 3500 U/min und/oder einem bestimmten Drehmoment zwischen einem Höchstdrehmoment und einem Mindestdrehmoment, die von der Drehzahl des Motors abhängen, gleichzeitig mit einer zusätzlichen Kraftstoffeinspritzung zum Austauscher (21) geleitet werden.

6. Verfahren nach einem der Ansprühe 1, 2 oder 5, **dadurch gekennzeichnet, dass** die Abgase bei einer Kühlmitteltemperatur zwischen einer Mindesttemperatur zwischen -5°C und +5°C und vorzugsweise um die 0°C und einer Höchsttemperatur zwischen 70 und 85°C und vorzugsweise um die 80°C und einer Außentemperatur unter einer Temperatur zwischen 5 und 15°C und vorzugsweise um die 10°C gleichzeitig mit einer zusätzlichen Kraftstoffeinspritzung zum Austauscher (21) geleitet werden.

7. Vorrichtung zum Heizen einer Fahrgastzelle eines Kraftfahrzeugs einer Bauart, die einen Kühlmittelzirkulationskreislauf (20) zur Kühlung eines Verbrennungsmotors (10) umfasst, und eine Pumpe (23), einen Lufterhitzer (22) und einen Wärmeaustauscher (21) umfasst, der in einer mit einer Schadstoffreinigungseinheit (16) versehenen Abgasleitung (15) angeordnet ist, **dadurch gekennzeichnet, dass** der Austauscher (21) in die Abgasleitung (15) bezüglich der Schadstoffreinigungseinheit (16) stromabwärts in Bezug auf die Zirkulationsrichtung der Abgase eingesetzt ist, und der Motor (10) Einspritzeinrichtungen für eine zusätzliche Kraftstoffmenge in zumindest manche der Zylinder des Motors nach der Haupteinspritzung des Kraftstoffs in diese und während der Entspannungsphase des Zyklus dieser Zylinder umfasst, um eine zusätzliche Kraftstoffverbrennung hervorzurufen und die Temperatur der in der Abgasleitung (15) und im Austauscher (21) zirkulierenden Gase zu erhöhen, und dass er eine Klappe (25) zum Leiten dieser Abgase zum Austauscher (21) oder zur Abzweigleitung (18) umfasst, wobei die Klappe (25) durch Steuereinrichtungen (26) in Abhängigkeit von den Betriebsbedingungen des Verbrennungsmotors, der Außentemperatur, der in der Fahrgastzelle angeforderten Temperatur und der Temperatur des Kühlmittels des Motors betätigt wird.

8. Vorrichtung nach Anspruch 7, **dadurch gekennzeichnet, dass** der Verbrennungsmotor (10) ein Dieselmotor mit Direkteinspritzung ist.

9. Vorrichtung nach Anspruch 7 oder 8, **dadurch gekennzeichnet, dass** die Klappe (25) zwischen einer ersten Position zum Schließen der Abzweigleitung (18) und einer zweiten Position zum Öffnen dieser Abzweigleitung (18) schwenkbar ist, wobei die Schwenkbewegung zwischen der ersten und der zweiten dieser Positionen in der Zirkulationsrichtung der Gase in der Abgasleitung (15) stattfindet.

10. Vorrichtung nach einem der Ansprüche 7 bis 9, **dadurch gekennzeichnet, dass** die Klappe (25) bezüglich dem Austauscher (21) strömungsabwärts in Bezug auf die Zirkulationsrichtung der Gase in der Abgasleitung vorgeordnet angeordnet ist.
